# EUROPEAN PATENT SPECIFICATION

(11) **EP 2 915 666 B1**
(45) Date of publication and mention of the grant of the patent: **02.01.2019**
(21) Application number: 13850634.0
(22) Date of filing: 05.11.2013
(51) Int. Cl.: B32B 25/14, B60C 1/00, B60C 13/00, C09D 4/00, C09D 201/00, B32B 25/08, C09D 175/06

(54) **RUBBER LAMINATE AND TIRE**
GUMMIVERBUNDSTOFF UND REIFEN
STRATIFIÉ DE CAOUTCHOUC ET PNEUMATIQUE

(30) Priority: 05.11.2012 JP 2012243811
(43) Date of publication of application: 09.09.2015
(73) Proprietor: Bridgestone Corporation, Tokyo 104-8340 (JP)
(72) Inventor: KOTSUBO, Hidefumi, Kodaira-shi Tokyo 187-8531 (JP); KANESUGI, Hiroyuki, Kodaira-shi Tokyo 187-8531 (JP)
(74) Representative: Oxley, Robin John George
(86) International application number: PCT/JP2013/006521
(87) International publication number: WO 2014/068998

(56) References cited:
- WO-A1-2007/137608
- JP-A- H 091 739
- JP-A- S62 143 955
- JP-A- S62 297 345
- JP-A- 2005 068 333
- JP-A- 2008 201 864
- JP-A- 2008 513 560
- JP-A- 2009 538 768
- JP-A- 2012 176 682
- DATABASE WPI Week 200103 2001 Thomson Scientific, London, GB; AN 2001-019844 XP002757077, & JP 2000 291710 A (YOKOHAMA RUBBER CO LTD) 20 October 2000 (2000-10-20)
- DATABASE WPI Week 201262 2012 Thomson Scientific, London, GB; AN 2012-L83569 XP002757078, & JP 2012 176682 A (BRIDGESTONE CORP) 13 September 2012 (2012-09-13)
- DATABASE WPI Week 200525 2005 Thomson Scientific, London, GB; AN 2005-237150 XP002757079, & JP 2005 068333 A (SUMITOMO RUBBER IND LTD) 17 March 2005 (2005-03-17)

## Description

### TECHNICAL FIELD

The present invention relates to: a rubber laminated body including a vulcanized rubber member and a coating film attached to the vulcanized rubber member, wherein the rubber laminated body exhibits good adhesion between the vulcanized rubber member and the coating film; and a tire using the rubber laminated body.

### BACKGROUND ART

Conventionally, a rubber product, like other molded products, is often subjected to a surface coloring process by, for example, painting, printing or the like on a surface thereof in order to enhance decorativeness, visibility, etc. of the product. Accordingly, a tire can be subjected to such a process of coloring or the like using various types of paints as described above. For example, PTL 1 discloses a method for providing a tire with decoration by using UV-curable ink. It is possible to perform clear printing of high quality with high contrast and no blur on a tire in a rapid and accurate manner by using this technique. JP2001-019844 discloses a laminate. JP2005-237150 discloses a rubber composition for a tire. WO2007/137608 discloses a tire with a coated structure. JP2012-176682 discloses a tire with a side wall with a protective layer.

### CITATION LIST

### Patent Literature

PTL 1: JP2010-125440

### SUMMARY

However, in a case where the technique of PTL 1 is applied to a rubber member, there arises a problem that a colored layer formed on the rubber member tends to come off or is likely to be subjected to cracking because of poor adhesion between the colored layer and the rubber member.

An object of the present invention is to provide: a rubber laminated body including a vulcanized rubber member and a coating film attached to the vulcanized rubber member, wherein the rubber laminated body exhibits good adhesion between the vulcanized rubber member and the coating film by selection of appropriate components of the coating film; and a tire using the rubber laminated body.

As a result of a keen study to achieve the aforementioned object to solve the prior art problem, the inventors discovered that a coating film attached to a vulcanized rubber member and containing a polythiol compound therein is less susceptible to oxygen inhibition in a curing process thereof and exhibits significantly better adhesion between the coating film and rubber than the conventional coating film because of hydrogen bonding formed between the thiol groups in the coating film and a rubber surface, thereby completing the present invention.

According to the present invention, it is possible to provide a rubber laminated body including a coating film which not only ensures decorativeness and visibility as desired but also exhibits good adhesion between a vulcanized rubber member and itself.

### BRIEF DESCRIPTION OF THE DRAWINGS

The present invention will be further described below with reference to the accompanying drawings, wherein:
FIG. 1 is a cross sectional view schematically showing an embodiment of a rubber laminated body of the present invention; and
FIG. 2 is a widthwise cross sectional view schematically showing a portion of a tire according to an embodiment of the present invention.

### DETAILED DESCRIPTION

Structures of the present invention and reasons why the present invention is to be restricted to the structures will be described with reference to the drawings hereinafter.

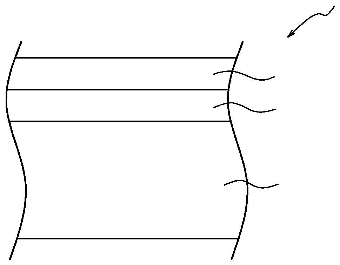

FIG. 1 is a cross sectional view schematically showing an embodiment of a rubber laminated body of the present invention.
The rubber laminated body of the present invention has a vulcanized rubber member 11 and a coating film 12 attached to the vulcanized rubber member 11, as shown in FIG. 1. These members will be described hereinafter, respectively.

### (Vulcanized rubber member)

The rubber laminated body of the present invention has the vulcanized rubber member 11, as shown in FIG. 1. A "vulcanized rubber member" represents a member made of a vulcanized rubber material obtained by vulcanizing a rubber material containing rubber components in the present invention. Types of the rubber components are not particularly restricted but the rubber material preferably contains a rubber component having unsaturated carbon-carbon bonds in the backbone chain thereof, so that good adhesion properties are ensured between the vulcanized rubber member 11 and the coating film 12.

A rubber component "having unsaturated carbon-carbon bonds in the backbone chain thereof" represents a rubber component of which polymer has at least 2 mol% of unsaturated carbon-carbon bonds (diene components) in the backbone chain thereof in the present invention.

Content of antioxidant agent in the (vulcanized) rubber member is preferably 0 to 1.5 parts by mass and more preferably less than 1.0 part by mass with respect to 100 parts by mass of the rubber components. Content of antioxidant in a rubber composition to be applied to the rubber member, exceeding 1.5 parts by mass with respect to 100 parts by mass of the rubber component(s), may inhibit curing by ultraviolet, of UV-curable paint suitably used for formation of the coating film, and deteriorate adhesion between the coating film and the rubber member. In contrast, the content of antioxidant in a rubber composition to be applied to the rubber member, less than 1.0 part by mass with respect to 100 parts by mass of the rubber component(s), improves curing of UV-curable paint by ultraviolet in particular and thus further enhances adhesion between the coating film and the rubber member.

Examples of the antioxidant agent include N-phenyl-N'-(1,3-dimethylbutyl)-p-phenylenediamine (6PPD), 2,2,4-trimethyl-1,2-dihydroquinoline polymer (TMDQ), and the like.

Natural rubber (NR) and/or synthetic rubber, for example, can be used as the rubber component having unsaturated carbon-carbon bonds in the backbone chain thereof. Examples of the synthetic rubber include: diene-based rubber such as synthetic polyisoprene rubber (IR), styrene-butadiene copolymer rubber (SBR), and polybutadiene rubber (BR); other synthetic rubbers including butyl-based rubber (IIR) and EPDM; and the like. These rubber components may be used by either a single type solely or two or more types in combination.

Further, it is preferable in terms of improving weather resistance of the rubber member that the diene-based rubber components described above of the rubber member are blended with the butyl-based rubber or EPDM described above such that the content of the butyl-based rubber or EPDM in the rubber component(s) is X, where X satisfies 15 mass % ≤ X ≤ 100 mass %.

In addition to the rubber components and the antioxidant agent described above, additives generally used in the rubber industry, examples thereof include filler such as carbon black, vulcanizing agent such as sulfur, vulcanization accelerator, process oil, antiscorching agent, zinc white, stearic acid and the like, may be appropriately selected and blended with the rubber composition to be applied to the rubber member unless addition of the additives adversely affects the object of the present invention. Commercially available products can be suitably used as these additives. The rubber composition to be applied to the rubber member can be manufactured by mixing the rubber component(s) with various additives selected according to necessity and subjecting the mixture to kneading, warming, extrusion and the like.

### (Coating film)

The coating film 12 as a constituent of the rubber laminated body 10 of the present invention, provided adjacent to the rubber member 11 as shown in FIG. 1, characteristically contains a polythiol compound.
The polythiol compound contained in the coating film causes thiol groups thereof to be bonded with the rubber component in the rubber member through hydrogen bonding, thereby enhancing adhesion between the coating film and the rubber member with ensuring decorativeness and visibility as desired.

Examples of the polythiol compound to be contained in a coloring paint include, without particular restriction thereto, 1,4-bis(3-mercaptobutyryloxy)butane, pentaerythritol tetrakis(3-mercaptobutyrate), 1,3,5-tris(3-mercaptobutyloxyethyl)-1,3,5-triazine-2,4,6(1H, 3H, 5H)-trione, trimethylolpropane tris (3-mercaptobutyrate), trimethylolethane tris (3-mercaptobutyrate),and the like.

The polythiol compound is a secondary thiol compound, optionally a trifunctional/thiol-functional compound.
Specifically, the polythiol compound preferable for use is pentaerythritol tetrakis(3-mercaptobutyrate) optionally with pentaerythritol tetrakis(3-mercaptopropionate).

Content of the polythiol compound in the coloring paint is preferably 1 to 40 mass %. When the content of the polythiol compound in the coloring paint is less than 1 mass %, the polythiol compound is so scarce that good adhesion between the coating film and the rubber portion cannot be obtained. When the content of the polythiol compound in the coloring paint exceeds 40 mass %, the polythiol compound is too much and possibly deteriorates coating properties and storage stability of the product.

The coating film 12 may contain a coloring agent, in addition to the polythiol compound, to realize decorativeness and visibility as desired. The coloring agent is blended in order to make a color of the coating film different from a color of the underlying rubber. For example, in a case where the underlying rubber is black, a coloring agent other than black is used for the coating film.
An organic or inorganic pigment/die can be used as the coloring agent in the present invention. Content of the coloring agent in use is preferably in the range of 1 to 50 mass % of the total amount of oligomers and monomers in the coating film.

Further, the coating film is energy-curable and preferably an energy-curable paint and more preferably a UV-curable paint. The coating film contains as primary components a photopolymerization initiator, oligomer, monomer and the aforementioned coloring agent, in addition to the polythiol compound. Further, the coating film may contain compounding agents such as ultraviolet absorber, antioxidant, photostabilizer, adhesion promoter, rheology adjusting agent, dispersant and the like according to necessity.

Examples of the oligomer which can be appropriately used include: reactive oligomers such as urethane (meth)acrylate, epoxy (meth)acrylate, polyester (meth)acrylate, (meth)acrylate of acrylic resin; and oligomer compounds not having reactive functional groups. The term "(meth)acrylate" represents both acrylate and methacrylate in the present invention. Content of olgimers in the coating film is preferably in the range of 20 to 80 mass %.

Type of a method for forming the coating film by using the aforementioned coloring paint is not particularly limited. A coating film can be formed on an outer surface of a vulcanized tire by: coating a rubber surface of the vulcanized tire with the aforementioned UV-curable paint by, e.g. screen printing, inkjet printing, letterpress printing, pad printing or the like; and curing a resulting coating layer by irradiating it with UV ray. Alternatively, a coating film may be formed on an outer surface of a tire by: obtaining a preparatory film in advance by coating a mold release film with the aforementioned UV-curable paint and curing a resulting coating layer on the film by irradiation of UV ray thereon; and setting the preparatory film in a mold and carrying out vulcanization of the tire (i.e. by an in-mold process)

Thickness of the coating film is not particularly restricted but preferably in the range of 5 µm to 100 µm in a case where the rubber laminated body is used as a constituent member of a tire. The coating film having thickness less than 5 µm may not be able to ensure satisfactory design characteristics. The coating film having thickness exceeding 100 µm undesirably increases the production cost.

A white layer is first formed on a side portion of a tire, to conceal the black color of the side portion, and color layer(s) of a single color or a couple of colors is formed on the white layer in a case where the tire is formed by using the rubber laminated body of the present invention. The white layer preferably has thickness in the range of 10 µm to 40 µm (the preferable thickness of the white layer may vary depending on the content of white pigment contained therein). The color layer preferably has thickness in the range of 5 µm to 30 µm.

### (Protective layer)

The rubber laminated body of the present invention preferably further includes a protective layer 13 on the coating film 12, as shown in FIG. 1. The protective layer 13 is a layer provided for protecting the coating film 12 and having high elasticity and good resistance to impact and wear.

Various types of protective layers made of inorganic hard materials are generally known for use on non-deformable substances. In a case, for example, where the rubber laminated body of the present invention is applied to a sidewall portion of a pneumatic tire, a protective layer for protecting the rubber laminated layer against friction and impact from the exterior is preferably made of a hard material not damaged by such friction and impact. A protective layer made of aqueous urethane resin is particularly preferable in this regard. It is possible to obtain a protective layer having high elasticity to bear repeated strains due to deformation of a tire and being excellent in impact resistance, wear resistance, contamination resistance and water resistance, by using an aqueous urethane resin for the protective layer. In this case, the protective layer 13 can prevent scratches and exfoliation of the rubber or a paint layer on the inner side thereof from occurring even when the tire runs on a rough road or the tire is washed, thereby well maintaining good appearance of decorations formed by the paint on the rubber (a surface of the rubber) of the sidewall portion of the tire.

Examples of the aqueous urethane resin include an aqueous urethane resin (urethane resin example 1) containing: polyester having hydroxyl groups obtained by reacting a polyol component with a polyprotic component; and polyisocyanate, wherein at least the polyol component, of the polyol component and the polyprotic component, has a cycloaliphatic structure in a molecule thereof. For example, the aqueous urethane resin described in JP 10-234884 or JP2001-271027 can be used as the aqueous urethane resin of the present invention.

Thickness of the protective layer is preferably in the range of 5 µm to 40 µm. The protective layer having thickness smaller than 5 µm cannot cause a tire-protecting effect as a protective layer in a satisfactory manner. The protective layer having thickness exceeding 40 µm cannot bear repeated strains due to deformation of a tire and cracks, which is disadvantageous as a protective layer. Thickness of the protective layer is more preferably in the range of 10 µm to 30 µm.

A liquid rubber component may be added as a material of the protective layer.
Further, including an ultraviolet absorber as a material of the protective layer is preferable because the ultraviolet absorber can suppress discoloration and aging of the rubber and the colored coating film and enhance weather resistance of the product in a case where the rubber laminated body of the present invention is used as a constituent member of a tire. A good effect that the content of antioxidant can be reduced is also obtained in this case.
A commercially available UV absorber such as benzophenone-based UV absorber, benzotriazole-based UV absorber, triazine-based UV absorber, and cyanoacrylate-based UV absorber can be used as the ultraviolet absorber of the present invention.

Content of the ultraviolet absorber is preferably in the range of 0.5 to 4.0 parts by mass with respect to 100 parts by mass of the cured urethane coating film. The cured urethane coating film may contain, other than the ultraviolet absorber described above, pigment, fluorescent brightening agent, curing catalyst, leveling agent, and the like.

### (Tire)

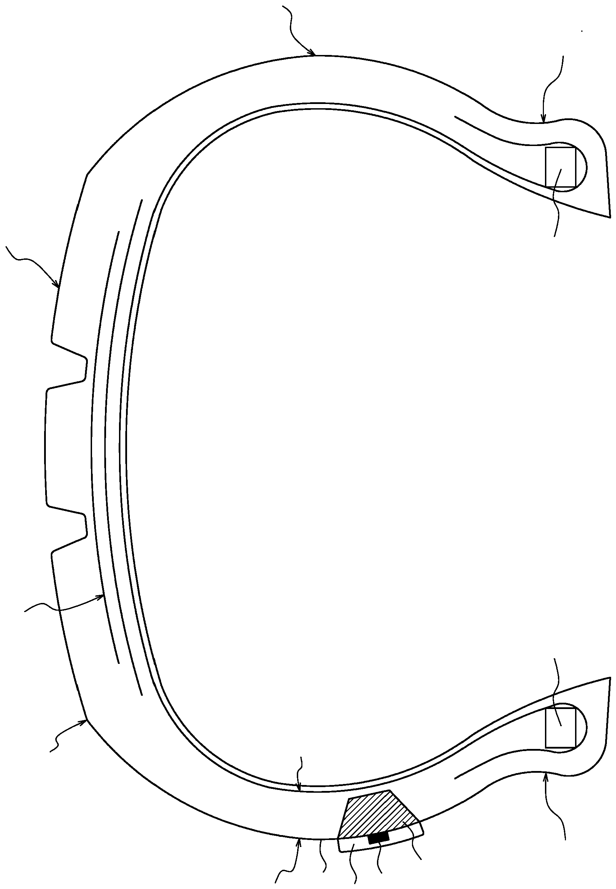

A tire of the present invention characteristically employs the rubber laminated body described above. Specifically, the tire has a pair of bead portions 1, a pair of sidewall portions 2, a tread portion 3 continuous with the respective sidewall portions, a carcass 5 provided to extend in a toroidal shape across bead cores 4 embedded in the bead portions 1, respectively, and a belt 6 provided on the outer side in the tire radial direction of a crown portion of the carcass 5, as shown in FIG. 2. Further, the tire shown in FIG. 2 has: a coating film 7 in a portion of a tire outer surface of the sidewall portion 2; a vulcanized rubber member 8 adjacent to the coating film 7 on the tire inner surface side (on the inner side in the tire width direction in the example shown in FIG. 2) of the coating film 7; and a cured urethane coating film 9 provided on the tire outer surface side of the coating film 7.

### Examples

The present invention will be described further in detail by the following Examples. The present invention, however, is not restricted by these Examples.

(Examples 1 to 11 and Comparative Examples 1 to 3)

### (1) Preparation of paint for coating film

UV-curable paint samples were prepared by mixing the relevant blend components according to the blend prescription shown in Table 1, respectively.

### (2) Production of rubber laminated body

Rubber composition samples were each prepared by mixing the relevant raw materials shown in Table 2 by using a banbury mixer, and the rubber composition samples thus obtained were each used as a rubber member of a rubber laminated body.
A surface of the rubber member thus obtained was then coated with the relevant coating film paint prepared in (1) above by the inkjet method such that a coating layer had thickness of 25 µm. Regarding each of rubber laminated body samples having the UV-curable paint samples thereon, the ink composition (the UV-curable paint) thereof was cured by using a UV lamp system "SUBZERO 085" (manufactured by Integration Technology Ltd., output: 100 W/cm) under the conditions of integrated light quantity: 200 mJ/cm² and peak illuminance: 1200 mW/cm², to form a coating film. The integrated light quantity and the peak illuminance were measured by using an accumulated UV meter "Power Puck" manufactured by EIT, Inc. Regarding each of rubber laminated body samples having the two-part polyurethane paint samples thereon, a coating film thereof was formed by curing at 40 °C for 20 hours. Regarding each of rubber laminated body samples having the thermosetting paint samples thereon, the thermosetting paint thereof was dried by hot wind at 80 °C for 10 minutes.
Thereafter, a protective layer was formed by aqueous urethane paint on each rubber laminated body sample, whereby the rubber laminated body samples of Examples and Comparative Examples each having the structure shown in FIG. 1 were produced.

### (Evaluation)

### (1) Curability of coating film

Curability of the coating film of each rubber laminated body sample was evaluated by checking the degree of completion of curing (of the film) after coating of the UV-curable paint and irradiation of UV ray thereon.
In Table 1, "○" represents that the coating film was completely cured, "Δ" represents that the coating film was cured somewhat unevenly, and "×" represents that the coating film was not cured.

### (2) Adhesion properties of coating film

Adhesion properties of the coating film of each rubber laminated body sample was evaluated by leaving the sample in a constant-temperature chamber at 60 °C for 48 hours and then subjecting the coating film of the sample to a cross-cut adhesion test according to JIS K 5600-5-6.
Evaluation was made by counting the number of grid squares in which the coating film had come off, calculating a reciprocal of the number, and converting the reciprocal to an index value relative to the corresponding reciprocal of Example 10 being "100". The evaluation results are shown in Table 1. The larger index value represents the better adhesion properties of the coating film. The index value ≥ 90 is regarded as acceptable.

### (3) Storage stability

Storage stability of each of the coating film paint samples prepared for Examples and Comparative Examples was evaluated by leaving the sample at 25 °C for 48 hours then checking presence/absence of gelation therein.
Regarding the results shown in Table 1, "○" represents that gelation was not observed and "×" represents that gelation was observed.

### (4) Bending fatigue resistance (Repeated fatigue test)

Crack growth was measured for each rubber laminated body sample by using a De Mattia flex-cracking and crack growth tester according to a bending crack test prescribed in JIS-K6260. Evaluation was made by forming a crack in the sample in the prescribed manner, counting the number of bending operations required for the crack to grow by 1 mm, and converting the number to an index value relative to the corresponding number of Comparative Example 1 being "100". The larger index value represents the better bending fatigue resistance of the sample.

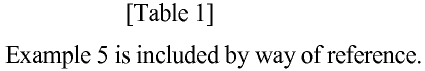

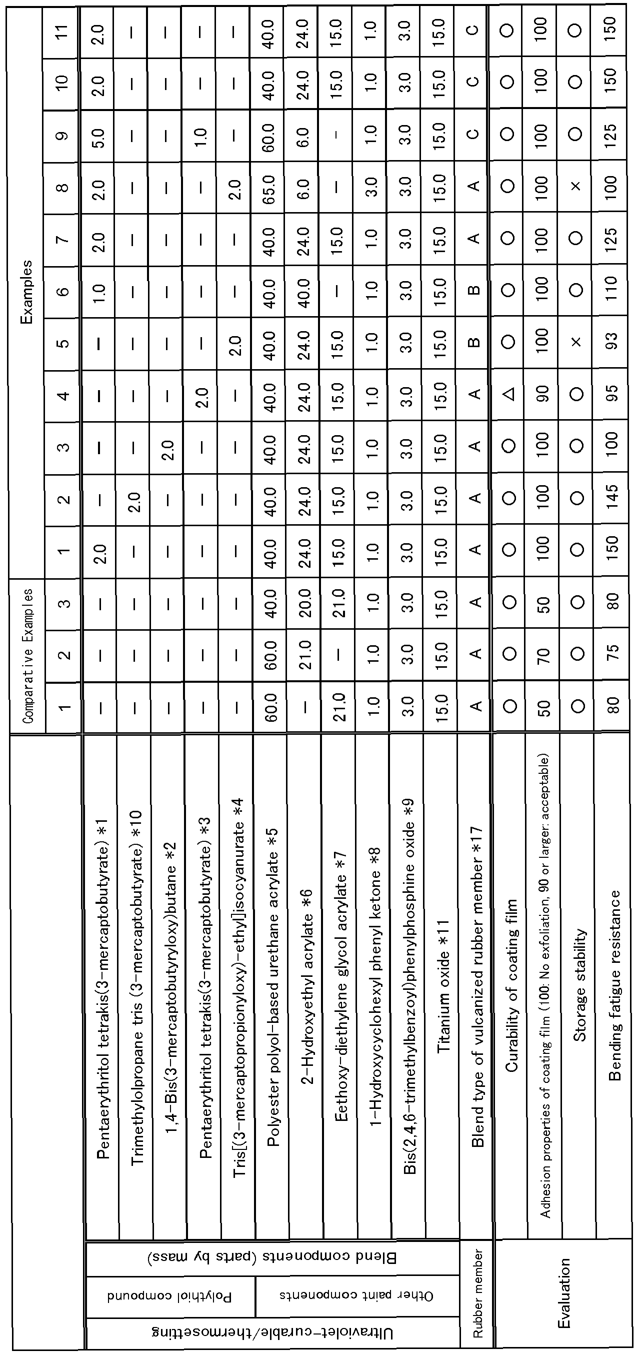

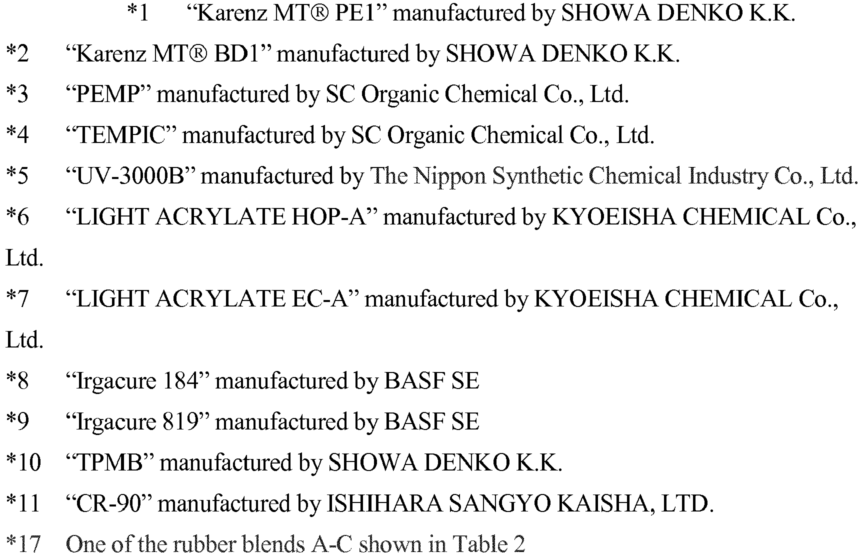

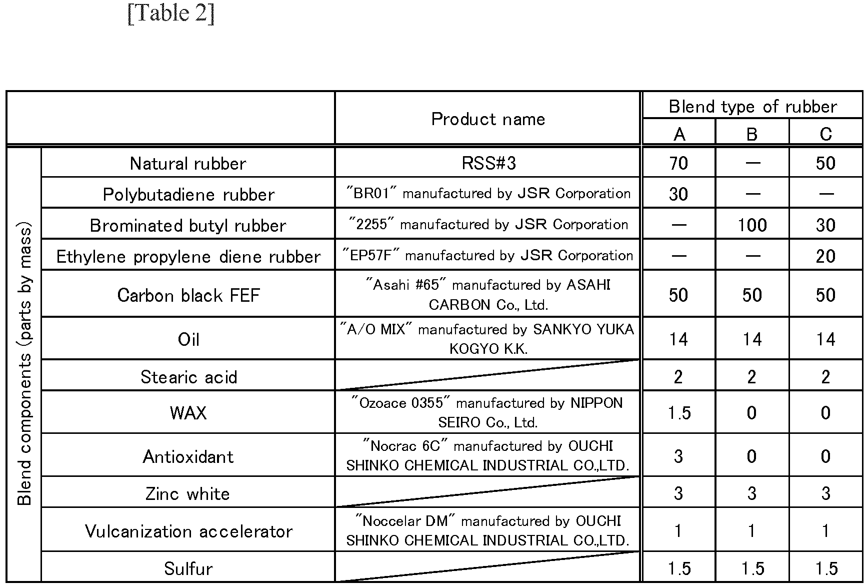

It is understood from the results shown in Table 1 that the samples of Examples according to the present invention are each excellent in all of curability, adhesion properties and bending fatigue resistance (curability in particular) of the coating film in good balance therebetween, as compared with the samples of Comparative Examples. It is understood that the samples of Examples 1-4, 6, 7 and 9-11 are excellent in storage stability, as well. In contrast, the samples of Comparative Examples exhibit poor results in at least one of the performances, as compared with the samples of Examples 1-11.

A test tire was manufactured by applying the rubber laminated body of Example 11, of Examples and Comparative Examples described above, to a sidewall portion of the tire. It was confirmed that the coating film according to Example 11 on the sidewall portion of the test tire had good adhesion properties.

### INDUSTRIAL APPLICABILITY

According to the present invention, it is possible to provide a rubber laminated body including a coating film which not only ensures decorativeness and visibility as desired but also exhibits good adhesion between a vulcanized rubber member and itself. The rubber laminated body, applied to a tire, significantly prolongs the product life and thus causes a superior effect in industrial terms.

### REFERENCE SIGNS LIST

- 1: Bead portion

- 2: Tire side portion
- 3: Tread portion
- 4: Bead core
- 5: Carcass
- 6: Belt
- 7: Coating film
- 8: Underlying rubber
- 9: Protective layer
- 10: Laminated body
- 11: Vulcanized rubber member
- 12: Coating film
- 13: Protective layer

## Claims

1. A rubber laminated body, comprising:
a vulcanized rubber member; and
a coating film attached to the vulcanized rubber member,
wherein the coating film contains a polythiol compound and the coating film is energy-curable, wherein the polythiol compound is a secondary thiol compound.

2. The rubber laminated body of claim 1, wherein the polythiol compound is a trifunctional/thiol-functional compound.

3. The rubber laminated body of claim 1, wherein the polythiol compound is pentaerythritol tetrakis(3-mercaptobutyrate).

4. The rubber laminated body of claim 1, wherein the content of the antioxidant agent in the vulcanized rubber member is in the range of 0 to 1.5 parts by mass with respect to 100 parts by mass of a rubber components.

5. The rubber laminated body of claim 1, wherein a rubber component of the rubber member comprises a diene-based rubber, optionally selected from the group consisting of synthetic polyisoprene rubber (IR), styrene-butadiene copolymer rubber (SBR), and polybutadiene rubber (BR).

6. The rubber laminated body of claim 5, wherein at least 15 mass % of the rubber component of the rubber member is a butyl-based rubber (IIR); or EPDM.

7. The rubber laminated body of claim 1, wherein a rubber component of the rubber member comprises polyisoprene rubber (IR), styrene-butadiene copolymer rubber (SBR), polybutadiene rubber (BR); butyl-based rubber (IIR); or EPDM or two or more of these rubbers in combination.

8. The rubber laminated body of claim 1, further comprising a protective layer provided on the coating film, wherein the protective layer is made of aqueous urethane resin.

9. The rubber laminated body of claim 8, wherein thickness of the protective layer is in the range of 5 µm to 40 µm.

10. The rubber laminated body of claim 8, wherein the protective layer contains ultraviolet absorber.

11. A tire, using the rubber laminated body of any of claims 1 to 10.

## Patentansprüche

1. Kautschuklaminierter Körper, umfassend:
ein vulkanisiertes Kautschukelement; und
einen Beschichtungsfilm, der an dem vulkanisierten Kautschukelement befestigt ist,
wobei der Beschichtungsfilm eine Polythiolverbindung enthält und der Beschichtungsfilm energieaushärtbar ist, wobei die Polythiolverbindung eine sekundäre Thiolverbindung ist.

2. Kautschuklaminierter Körper nach Anspruch 1, wobei die Polythiolverbindung eine trifunktionelle/thiolfunktionelle Verbindung ist.

3. Kautschuklaminierter Körper nach Anspruch 1, wobei die Polythiolverbindung Pentaerythritoltetrakis(3-mercaptoburyrat) ist.

4. Kautschuklaminierter Körper nach Anspruch 1, wobei der Gehalt des Antioxidationsmittels in dem vulkanisierten Kautschukelement im Bereich von 0 bis 1,5 Masseteilen mit Bezug auf 100 Masseteile einer Kautschukkomponente liegt.

5. Kautschuklaminierter Körper nach Anspruch 1, wobei eine Kautschukkomponente des Kautschukelements einen Kautschuk auf Dienbasis umfasst, der wahlweise aus der Gruppe ausgewählt ist bestehend aus synthetischem Polyisoprenkautschuk (IR), StyrolButadien-Copolymerkautschuk (SBR) und Polybutadienkautschuk (BR).

6. Kautschuklaminierter Körper nach Anspruch 5, wobei mindestens 15 Masse-% der Kautschukkomponente des Kautschukelements ein Kautschuk auf Butylbasis (IIR) oder EPDM ist.

7. Kautschuklaminierter Körper nach Anspruch 1, wobei eine Kautschukkomponente des Kautschukelements Polyisoprenkautschuk (IR), Styrol-Butadien-Copolymerkautschuk (SBR), Polybutadienkautschuk (BR), Kautschuk auf Butylbasis (IIR) oder EPDM oder zwei oder mehr dieser Kautschuk in Kombination umfasst.

8. Kautschuklaminierter Körper nach Anspruch 1, ferner eine Schutzschicht umfassend, die auf dem Beschichtungsfilm bereitgestellt ist, wobei die Schutzschicht aus wässrigem Urethanharz hergestellt ist.

9. Kautschuklaminierter Körper nach Anspruch 8, wobei die Dicke der Schutzschicht im Bereich von 5 µm bis 40 µm liegt.

10. Kautschuklaminierter Körper nach Anspruch 8, wobei die Schutzschicht einen Ultraviolettabsorber enthält.

11. Reifen, bei dem der kautschuklaminierte Körper nach einem der Ansprüche 1 bis 10 verwendet wird.

## Revendications

1. Corps stratifié de caoutchouc, comprenant:
un élément de caoutchouc vulcanisé; et
un film de revêtement fixé à l'élément de caoutchouc vulcanisé,
où le film de revêtement contient un composé polythiol et le film de revêtement est durcissable par rayons d'énergie, où le composé polythiol est un composé thiol secondaire.

2. Corps stratifié de caoutchouc selon la revendication 1, dans lequel le composé polythiol est un composé trifonctionnel/à fonctionnalité thiol.

3. Corps stratifié de caoutchouc selon la revendication 1, dans lequel le composé polythiol est le pentaérythritol tétrakis(3-mercaptobutyrate).

4. Corps stratifié de caoutchouc selon la revendication 1, dans lequel la teneur de l'agent antioxydant dans l'élément de caoutchouc vulcanisé se situe dans la plage de 0 à 1,5 partie en masse par rapport à 100 parties en masse du constituant de caoutchouc.

5. Corps stratifié de caoutchouc selon la revendication 1, dans lequel un constituant de caoutchouc de l'élément de caoutchouc comprend un caoutchouc à base de diène, éventuellement sélectionné dans le groupe constitué du caoutchouc synthétique de polyisoprène (IR), du caoutchouc copolymère de styrène-butadiène (SBR), et du caoutchouc de polybutadiène (BR).

6. Corps stratifié de caoutchouc selon la revendication 5, dans lequel au moins 15 % en masse du constituant de caoutchouc de l'élément de caoutchouc est un caoutchouc à base de butyle (IIR); ou un EPDM.

7. Corps stratifié de caoutchouc selon la revendication 1, dans lequel un constituant de caoutchouc de l'élément de caoutchouc comprend du caoutchouc de polyisoprène (IR), du caoutchouc copolymère de styrène-butadiène (SBR), du caoutchouc de polybutadiène (BR); du caoutchouc à base de butyle (IIR); ou un EPDM ou deux ou plusieurs de ces caoutchoucs en combinaison.

8. Corps stratifié de caoutchouc selon la revendication 1, comprenant en outre une couche protectrice disposée sur le film de revêtement, où la couche protectrice est constituée d'une résine d'uréthane aqueuse.

9. Corps stratifié de caoutchouc selon la revendication 8, dans lequel l'épaisseur de la couche protectrice se situe dans la plage de 5 µm à 40 µm.

10. Corps stratifié de caoutchouc selon la revendication 8, dans lequel la couche protectrice contient un agent d'absorption du rayonnement ultraviolet.

11. Pneumatique, utilisant le corps stratifié de caoutchouc selon l'une quelconque des revendications 1 à 10.
